(19) Europäisches Patentamt
European Patent Office
Office européen des brevets

(11) **EP 3 860 113 B1**

(12) **FASCICULE DE BREVET EUROPEEN**

(45) Date de publication et mention
de la délivrance du brevet:
**07.06.2023 Bulletin 2023/23**

(21) Numéro de dépôt: **21151593.7**

(22) Date de dépôt: **14.01.2021**

(51) Classification Internationale des Brevets (IPC):
*H04N 5/361* (2011.01)    *H04N 5/217* (2011.01)
*H04N 5/365* (2011.01)    *H04N 5/378* (2011.01)

(52) Classification Coopérative des Brevets (CPC):
**H04N 25/63; H04N 25/67; H04N 25/75**

(54) **PROCÉDÉ DE CORRECTION DE DÉFAUTS ET NOTAMMENT DE RÉDUCTION DU BRUIT DANS UNE IMAGE FOURNIE PAR CAPTEUR D'IMAGE**

VERFAHREN ZUR DEFEKTKORREKTUR UND INSBESONDERE ZUR RAUSCHUNTERDRÜCKUNG IN EINEM VON EINEM BILDSENSOR GELIEFERTEN BILD

METHOD FOR CORRECTING DEFECTS AND IN PARTICULAR FOR REDUCING THE NOISE IN AN IMAGE SUPPLIED BY IMAGE SENSOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **28.01.2020 FR 2000834**

(43) Date de publication de la demande:
**04.08.2021 Bulletin 2021/31**

(73) Titulaire: **FIRST LIGHT IMAGING**
**13590 Meyreuil (FR)**

(72) Inventeur: **LEMARCHAND, Stéphane**
**13760 Saint Cannat (FR)**

(74) Mandataire: **Marchand, André et al**
**OMNIPAT**
**24 Place des Martyrs de la Résistance**
**13100 Aix-en-Provence (FR)**

(56) Documents cités:
**US-A1- 2004 051 796    US-A1- 2004 051 797**
**US-A1- 2005 157 942    US-A1- 2015 110 248**
**US-B1- 7 283 163**

**Description**

La présente invention concerne le domaine des dispositifs imageurs tels que les caméras et appareils photographiques. L'invention concerne en particulier les dispositifs imageurs intégrant des capteurs d'image en technologie CMOS (Complementary Metal Oxide Semi-Conductor) ou CCD ("Charge-Coupled Device"), de type CTIA ("Charge Trans Impédance Amplifier") ou SF ("Source Follower"). L'invention peut s'appliquer au domaine de l'imagerie dans le domaine du visible, aussi bien que dans le domaine des infrarouges SWIR, MWIR, LWIR ("Short-, Mid-, Long-Wave Infra Red").

Généralement, un capteur d'image de type CMOS comprend des pixels ou photosites disposés selon une configuration matricielle. Chaque pixel comprend une zone photosensible, généralement une photodiode, configurée pour accumuler des charges électriques en fonction de la lumière qu'elle reçoit, et un circuit de lecture pour mesurer la quantité de charges accumulées par la photodiode. Le circuit de lecture comprend un transistor de transfert permettant de commander le transfert des charges électriques accumulées dans la photodiode vers un noeud de lecture. Le pixel est ainsi commandé selon un cycle comprenant une phase d'initialisation, une phase d'intégration, et une phase de lecture. Durant la phase d'intégration, la photodiode accumule des charges électriques en fonction de la lumière qu'elle reçoit. La phase de lecture consiste à générer un signal correspondant à la quantité de charges électriques accumulées par la photodiode durant la phase d'intégration. La phase d'initialisation consiste à éliminer les charges électriques accumulées par la photodiode durant la phase d'intégration.

Les images produites par les capteurs d'image actuels sont perturbées par diverses sources de bruit, et ce d'autant plus que les capteurs d'image sont miniaturisés. Les effets de certaines de ces sources de bruit apparaissent dans les images prises lorsque le capteur d'image se trouve placé dans le noir. Dans ces conditions, les circuits de pixel du capteur d'image peuvent produire des signaux correspondant à des pixels non totalement noirs. Il s'avère que l'amplitude de ces signaux de noir varie en fonction de la température du capteur d'image, et du temps d'intégration sélectionné pour générer l'image. L'amplitude de ces signaux de noir peut également varier d'un circuit de pixel à l'autre au sein d'un même capteur d'image, et d'un capteur d'image à l'autre, même si ces derniers sont issus d'une même chaine de fabrication.

Il est connu de constituer une image de motif de bruit fixe (Fixed Pattern Noise) en générant une image noire à l'aide du capteur d'image placé dans le noir, et de retrancher cette image noire des images produites par le capteur d'image. Pour tenir compte de variations de température et du temps d'intégration, il serait nécessaire de produire une telle image de noir à chaque fois qu'une nouvelle image doit être obtenue. Or, dans de nombreuses applications, notamment de capture de flux vidéo, le temps disponible avant chaque capture d'image est généralement insuffisant pour générer une telle image de noir. En outre, l'application d'une correction à chaque image ou série d'images dans le cas d'images vidéo génère inévitablement un scintillement qui peut être gênant.

La demande de brevet US 2004/0051796 décrit un modèle de correction d'images produites par un capteur d'image, défini par l'équation suivante :

$$CVD(r, c) = G.s(r, c) \, (A.t/q) \, \exp(-(EG-ET)/kT)$$

dans laquelle G est une valeur de gain, $s(r, c)$ est un facteur d'échelle pour le pixel $(r,c)$, A est une surface de pixel, q est la charge d'un electron, EG est une bande interdite ("band gap", ET est une bande d'énergie d'impureté, t le temps d'intégration, k est la constante de Boltzmann et T est la température du capteur d'image.

La demande de brevet US 2015/0110248 décrit un autre modèle de correction d'image défini par l'équation suivante :

$$O(i,j,T) = A(i,j)T + B(i,j) + 1/f \, C(j,j).D(i,j)T$$

dans laquelle $A(j,j)$, $B(i,j)$, $C(i,j)$ et $D(i,j)$ sont des coefficients dépendant du pixel $(i,j)$, T est la température du capteur d'image, et f est la fréquence de trame du capteur d'image.

Il est donc souhaitable de proposer un procédé efficace de réduction de bruit dans un dispositif imageur, qui tienne compte des variations de température du capteur d'image et de changements de temps d'intégration, et qui ne perturbe pas la visualisation des images. Il est également souhaitable que le procédé de réduction de bruit puisse être adapté à chaque dispositif imageur.

Des modes de réalisation concernent un procédé de défauts apparaissant dans une image fournie par un capteur d'image, le procédé comprenant des étapes consistant à recevoir une image à corriger, prise par le capteur d'image, recevoir une température du capteur d'image, acquise lors de la prise de l'image à corriger par le capteur d'image, recevoir un temps d'intégration appliqué par le capteur d'image pour prendre l'image à corriger, et pour chaque pixel de l'image à corriger, retrancher de la valeur du pixel un facteur de correction de bruit spécifique du pixel, issu d'un modèle de réduction de bruit comprenant une composante linéaire fonction de la température du capteur d'image, ajoutée à une composante exponentielle fonction de la température du capteur d'image et multipliée par le temps d'intégration, les composantes linéaire et exponentielle dépendant de coefficients spécifiques du pixel, acquérir, par le capteur d'image, des images en l'absence de lumière avec un temps d'intégration minimum, chaque image étant prise à une température respective distincte, et déterminer, pour chaque pixel de l'image à corriger, des coefficients de la composante linéaire, par des calculs de régression linéaire appliqués à des pixels correspondant dans les images en l'absence de lumière prises aux températures respectives.

Selon un mode de réalisation, le modèle de réduction de bruit est défini par l'équation suivante :

$$bm[i,j] = IT \times ad[i,j] \times Exp(bd[i,j] \times TP) + ab[i,j] \times TP + bb[i,j]$$

dans laquelle $bm[i,j]$ est le facteur de correction de bruit à retrancher d'un pixel correspondant de l'image à corriger, IT est le temps d'intégration, TP est la température du capteur d'image, EXP est la fonction exponentielle, et $ad[i,j]$, $bd[i,j]$, $ab[i,j]$ et $bb[i,j]$ sont les coefficients spécifiques du pixel.

Selon un mode de réalisation, le procédé comprend un calcul du facteur de correction de bruit de chaque pixel à chaque fois que le temps d'intégration est modifié, ou à chaque fois que la température du capteur d'image s'écarte d'une valeur précédente de plus d'une valeur de seuil d'écart de température.

Selon un mode de réalisation, le procédé comprend des étapes consistant à : acquérir par le capteur d'image des images en l'absence de lumière, à différents temps d'intégration, le capteur d'image étant soumis à différentes températures, générer des images corrigées obtenues en retranchant de chacune des images prises par le capteur d'image en l'absence de lumière à différents temps d'intégration et à différentes températures, l'image prise par le capteur d'image en l'absence de lumière avec le temps d'intégration minimum et à la même température, et déterminer les coefficients de la composante exponentielle par des calculs de régression exponentielle appliqués aux pixels respectifs des images corrigées obtenues aux différentes températures et correspondant à un même temps d'intégration.

Selon un mode de réalisation, les coefficients de la composante exponentielle sont déterminés par un calcul de moyenne de coefficients obtenus par les calculs de régression exponentielle pour différents temps d'intégration.

Selon un mode de réalisation, le modèle de réduction de bruit comprend une composante identique pour tous les pixels du capteur d'image dépendant du temps d'intégration.

Selon un mode de réalisation, le procédé comprend l'acquisition d'un flux d'images vidéo, le facteur de correction de bruit correspondant à chaque pixel d'une image du flux vidéo, étant retranché du pixel correspondant de chaque image du flux vidéo.

Selon un mode de réalisation, le procédé comprend des étapes consistant à : recevoir une commande de sélection d'une valeur de gain du capteur d'image, et sélectionner pour chaque pixel de l'image à corriger un facteur de correction de bruit spécifique du pixel en fonction de la valeur de gain sélectionnée, le facteur de correction de bruit étant à utiliser pour corriger la valeur de chaque pixel de l'image à corriger, le facteur de correction de bruit étant déterminé à partir d'un jeu de coefficients spécifiques des pixels, généré en fonction de la valeur de gain sélectionnée.

Selon un mode de réalisation, le procédé comprend une étape consistant, pour chaque pixel d'une image corrigée après réduction de bruit, à multiplier la valeur du pixel par un facteur de correction de gain spécifique du pixel, issu d'une table d'uniformisation de gain, pour obtenir une image avec un gain uniformisé.

Selon un mode de réalisation, le procédé comprend une mise à jour de la table d'uniformisation de gain à chaque fois que le temps d'intégration est modifié, ou à chaque fois que la température du capteur d'image s'écarte d'une valeur précédente de plus d'une valeur de seuil d'écart de température, la mise à jour de la table d'uniformisation de gain étant effectuée par des calculs d'interpolation appliqués à un ensemble de tables d'uniformisation de gain déterminées pour différentes températures.

Selon un mode de réalisation, le procédé comprend des étapes consistant à : acquérir par le capteur d'image des séries d'images en présence d'une source de lumière uniforme avec différents temps d'intégration ou sous différentes intensités de la source de lumière, chaque série d'images étant prise à une température respective distincte, et déterminer un gain, pour chaque pixel d'une des images de chaque série d'images, par un calcul de régression linéaire appliqués à des pixels correspondants dans les images de la série d'images, déterminer, pour chaque pixel d'une des images de chaque série d'images, un facteur de correction de gain en divisant une moyenne des gains obtenus pour tous les pixels de la série d'images par le gain déterminé pour le pixel.

Selon un mode de réalisation, le procédé comprend des étapes consistant à : acquérir par le capteur d'image une série d'images en l'absence de lumière, à un temps d'intégration moyen, chaque image étant obtenue avec le capteur d'image soumis à une température respective, calculer, pour chaque pixel d'une des images de la série d'images acquises, une moyenne d'écarts aux différentes températures de capteur d'image, chaque écart étant calculé pour une température du capteur d'image, entre la valeur du pixel de l'image de la série d'image correspondant à la température du capteur d'image et le facteur de correction de bruit défini pour le pixel au temps d'intégration moyen et à la température du capteur d'image, et comparer la moyenne d'écarts à une valeur de seuil, et si la moyenne d'écarts est supérieure à la valeur de seuil pour un pixel, le pixel est considéré comme défectueux.

Selon un mode de réalisation, le procédé comprend une étape consistant à : corriger chaque image acquise par le capteur d'image en remplaçant la valeur d'un pixel défectueux par la valeur d'un pixel voisin ou une valeur moyenne de pixels voisins, ou corriger chaque image acquise par le capteur d'image en remplaçant les valeurs respectives d'un pixel défectueux et de pixels voisins du pixel défectueux par la valeur d'un pixel voisin du pixel défectueux et des pixels voisins du pixel défectueux ou une valeur moyenne de pixels voisins du pixel défectueux et des pixels voisins du pixel défectueux.

Des modes de réalisation peuvent également concerner un dispositif de correction de défauts apparaissant dans une image fournie par un capteur d'image, mettant en oeuvre le procédé défini précédemment.

Des modes de réalisation peuvent également concerner un dispositif imageur comprenant un capteur d'image, un circuit d'acquisition d'une température du capteur d'image et un circuit d'acquisition d'un temps d'intégration appliqué au capteur d'image, mettant en oeuvre le procédé défini précédemment.

Selon un mode de réalisation, le capteur d'image est de type CTIA ou SF.

Des modes de réalisation peuvent également concerner un produit programme d'ordinateur chargeable dans la mémoire d'un calculateur, qui, lorsqu'il est exécuté par le calculateur, configure le calculateur pour mettre en oeuvre le procédé défini précédemment.

Des exemples de réalisation de l'invention seront décrits dans ce qui suit, à titre non limitatif en relation avec les figures jointes parmi lesquelles :

la figure 1 représente schématiquement un dispositif imageur classique,
la figure 2 représente schématiquement un capteur d'image associé à un dispositif de réduction de bruit pour dispositif imageur, selon un mode de réalisation,
la figure 3 illustre schématiquement un procédé de calcul de coefficients de réduction de bruit, selon un mode de réalisation,
les figures 4 à 6 représentent des courbes de variation d'intensité de signaux de pixel en fonction de la température du capteur d'image,
la figure 7 représente schématiquement sous la forme de blocs un circuit de correction de gain recevant les images issues du dispositif de réduction de bruit, selon un mode de réalisation,
la figure 8 illustre schématiquement sous la forme de blocs un circuit de génération de tables de coefficients de correction de gain, selon un mode de réalisation.

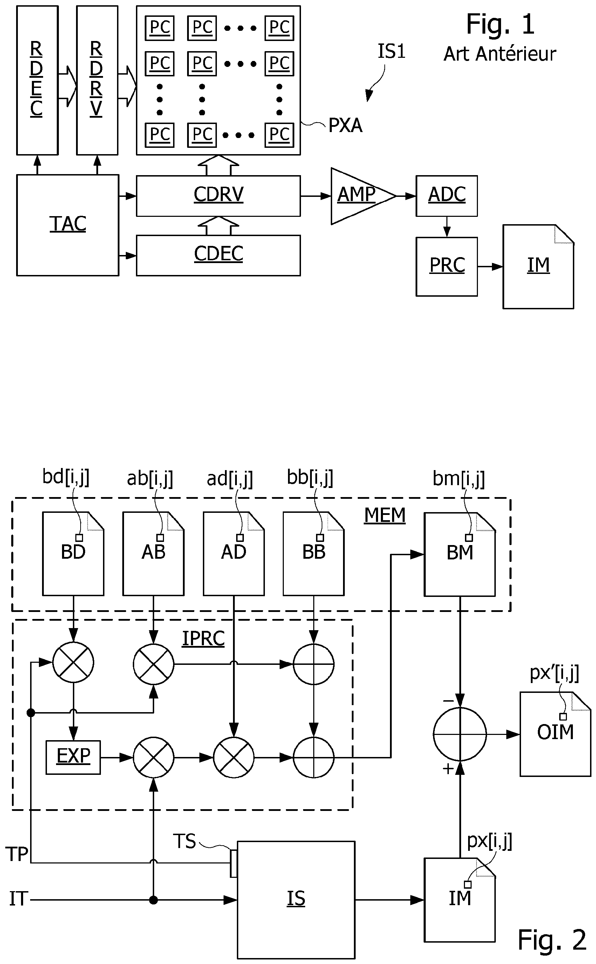

La figure 1 représente un capteur d'image IS1 et des circuits de lecture ADC, AMP et de de traitement PRC. Le capteur d'image IS1 peut être intégré à un dispositif portable tel qu'un appareil photo, une caméra, un téléphone mobile, ou tout autre dispositif présentant une fonction de capture d'image. Le capteur d'image IS1 comprend classiquement une matrice PXA de circuits de pixels PC. La matrice PXA comprend des circuits de pixel PC disposés en une pluralité de lignes et en une pluralité de colonnes. Le capteur d'image IS1 comprend également des circuits de contrôle RDRV, RDEC, CDRV, CDEC, TAC, configurés pour fournir différents signaux de commande aux circuits de pixel PC en fonction de différentes phases à enchaîner pour capturer des images. Les circuits de lecture et de traitement peuvent comprendre un amplificateur AMP, un convertisseur analogique/numérique ADC et un processeur PRC. La matrice PXA fournit des signaux de pixel aux circuits de lecture et de traitement AMP, ADC, PRC configurés pour fournir des images IM à partir des signaux de pixel.

Les lignes de pixels sont activées sélectivement par un circuit de pilotage de ligne RDRV en réponse à un décodeur d'adresse de ligne RDEC. Les colonnes de pixels sont également activées par un circuit de pilotage de colonne commandé par un décodeur de colonne CDEC. Les circuits RDRV et CDRV fournissent les tensions appropriées pour commander les circuits de pixel PC. Le capteur IS comprend également un circuit de contrôle TAC qui commande les décodeurs d'adresse RDEC et CDEC et les circuits de pilotage RDRV, CDRV pour sélectionner à chaque instant la ligne et la colonne de pixels appropriée en vue d'une lecture de pixel. Les signaux de pixel lus sont amplifiés par l'amplificateur AMP, et numérisés par le convertisseur analogique/numérique ADC. Les signaux de pixels numérisés sont traités par le processeur d'image PRC qui fournit une image IM à partir des signaux de pixels numérisés. Le processeur d'image PRC peut comprendre des mémoires pour traiter et stocker les signaux d'image reçus.

La figure 2 représente un capteur d'image IS associé à un dispositif de réduction de bruit, selon un mode de réalisation. Dans l'exemple de la figure 2, le dispositif de réduction de bruit comprend une fonction de réduction de bruit mise en oeuvre par un processeur IPRC couplé à une mémoire MEM. Le processeur IPRC peut être intégré au capteur d'image IS ou être connecté à ce dernier. La définition de la fonction de réduction de bruit se base sur un modèle de bruit comportant deux composantes, à savoir une composante de décalage ("bias") variant linéairement en fonction de la température du capteur d'image, et une composante de signal de noir ("dark current") variant à la fois en fonction de la température et en fonction du temps d'intégration.

Selon un mode de réalisation, le modèle de bruit mis en oeuvre par le processeur IPRC est défini par l'équation suivante :

$$bm[i,j] = IT \times ad[i,j] \times Exp(bd[i,j] \times TP) + ab[i,j] \times TP + bb[i,j] \qquad (1)$$

dans laquelle $bm[i,j]$ est un pixel d'une image de correction BM à retrancher de chaque image produite par le capteur d'image IS, la position du pixel étant repérée par des indices de ligne $i$ et de colonne $j$, IT est le temps d'intégration, TP est la température mesurée par le capteur d'image IS ou un capteur de température TS couplé au capteur d'image, $ad[i,j]$, $bd[i,j]$, $ab[i,j]$ et $bb[i,j]$ sont des coefficients déterminés pour le pixel à corriger à la position $[i,j]$, et EXP est la fonction exponentielle. Les coefficients $ad[i,j]$, $bd[i,j]$, $ab[i,j]$ et $bb[i,j]$ sont introduits et mémorisés sous la forme de tables AD, BD, AB, BB dans la mémoire MEM du dispositif imageur. Chaque pixel $px[i,j]$ d'une image IM générée par le capteur d'image est corrigée pour produire une image corrigée OIM, en appliquant l'équation suivante :

$$px'[i,j] = px(j,j) - bm[i,j] \qquad (2)$$

dans laquelle $px'[i,j]$ est la valeur corrigée du pixel $px[i,j]$.

Dans ces conditions, les valeurs de pixels fournies par le capteur d'image IS peuvent être corrigées individuellement pour tous les temps d'intégration et températures de fonctionnement et du dispositif imageur. En raison de la simplicité de la correction consistant à retrancher de chaque pixel $px[i,j]$ de l'image IM le pixel correspondant $bm[i,j]$ de l'image de correction BM, les images fournies par le capteur d'image IS peuvent être traitées à des cadences très élevées. Ainsi, le processeur IPRC peut traiter des flux vidéo, y compris des flux vidéo à plusieurs centaines de trames par seconde. Si nécessaire, cette correction peut être réalisée par un circuit en logique câblée (comme illustré par la figure 2). En outre, tous les pixels de chaque image peuvent être traités simultanément en parallèle, en prévoyant un tel circuit pour chacun des pixels de l'image.

De même, en raison de la simplicité de l'équation (1) faisant intervenir uniquement des opérations d'addition, de multiplication et d'exponentiation EXP, le calcul de l'image de correction BM peut être effectué en temps réel à la suite d'une variation de température TP ou d'un changement de temps d'intégration IT. Si nécessaire, la fonction de mise à jour de l'image de correction BM exécutée par le processeur IPRC peut être également réalisée par un circuit en logique câblée (comme illustré par la figure 2), l'opération d'exponentiation EXP pouvant être réalisée simplement par une table de correspondance ("lookup table"). Tous les pixels $bm[i,j]$ de l'image de correction BM peuvent être également calculés en parallèle, sachant qu'il n'existe pas d'interaction entre les pixels de l'image BM.

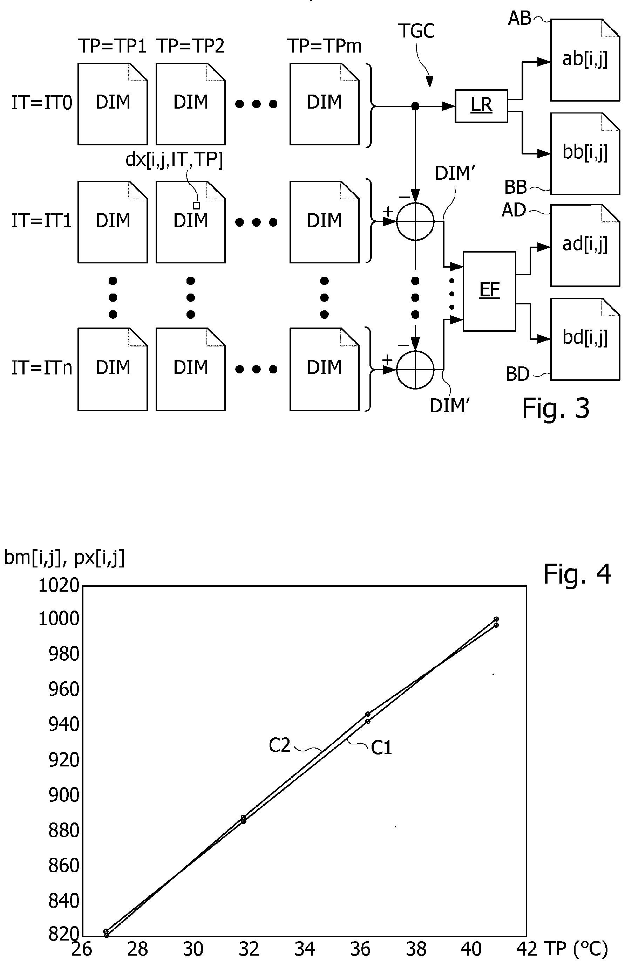

La figure 3 représente un circuit de génération TGC des tables de coefficients AD, BD, AB, BB. Le circuit TGC reçoit en entrée des images de noir DIM[IT0-ITn, TP1-TPm] obtenues à l'aide du dispositif imageur, durant une phase de calibration, en soumettant le capteur d'image IS à différentes températures TP1, TP2, ... TPm, et pour chaque température, en fixant successivement le temps d'intégration IT à différentes valeurs IT0, IT1, ... ITn, dont une valeur minimum IT0. Les températures TP1-TPm peuvent être choisies dans la plage de températures de fonctionnement du capteur d'image IS. Par ailleurs, le nombre de valeurs de temps d'intégration IT peut être fixé à une valeur comprise entre 5 et 15 dans la plage de valeurs possibles de temps d'intégration du dispositif imageur.

Durant une première étape, les coefficients de décalage $ab[i,j]$, $bb[i,j]$ sont calculés à partir des images DIM[IT0, TP1-TPm] obtenues avec le temps d'intégration minimum IT0, sachant que, dans l'équation (1), le temps d'intégration IT est un facteur multiplicatif dans la composante de signal de noir, et donc que cette composante devient négligeable lorsque le temps d'intégration est très petit. Selon un exemple de réalisation, le temps d'intégration minimum IT0 est compris entre 10 et 100 $\mu s$, et de préférence compris entre 40 et 60 $\mu s$. Il en résulte qu'en première approximation, chaque pixel $dx[i,j,IT0,TP]$ des images DIM[IT0, TP1-TPm] obtenues avec le temps d'intégration IT0 peut être modélisé par l'équation suivante :

$$dx[i,j,IT0,TP] \simeq ab[i,j] \times TP + bb[i,j] \qquad (3)$$

avec TP = TP1, TP2, ... TPm. Ainsi, les coefficients de décalage $ab[i,j]$ et $bb[i,j]$ des tables AB, BB peuvent être déterminés pour chaque pixel $dx[i,j,IT0,TP]$, dans la plage de températures TP1 -TPm, par un calcul de régression linéaire LR.

Durant une seconde étape, les coefficients de noir $ad[i,j]$, $bd[i,j]$ des tables AD, BD sont calculés. A cet effet, des images corrigées DIM'[IT1-ITn, TP1-TPm] sont dérivées des images DIM[IT1-ITn, TP1-TPm] en retranchant de chaque pixel $dx[i,j,IT,TP]$ de chaque image DIM[IT, TP] obtenue pour les temps d'intégration IT1-ITn et les températures TP1-TPm, la valeur du pixel correspondant $dx[i,j,IT0,TP]$ se trouvant dans l'image DIM[IT0, TP] obtenue pour la même température TP et pour le temps d'intégration minimum IT0. Ainsi, compte tenu de l'équation (1), chaque pixel dx'[i,j,IT,TP] des images corrigées DIM'[IT1-ITn, TP1-TPm] peut être modélisé par l'équation suivante :

$$dx'[i,j,IT,TP] = IT \times ad[i,j,IT] \times Exp(bd[i,j,IT] \times TP) \tag{4}$$

avec dx'[i,j,IT,TP] = dx[i,j,IT,TP] - dx[i,j,IT0,TP].

Les coefficients de noir ad[i,j] et bd[i,j] peuvent être déterminés pour chaque temps d'intégration IT1-ITn par un calcul de régression exponentielle EF ("exponential fit"). Un tel calcul est par exemple mis en oeuvre dans la bibliothèque logicielle MATLAB de MathWorks®. Les coefficients de noir ad[i,j] et bd[i,j] mémorisés dans les tables AD, BD peuvent être obtenus par un calcul de moyenne des coefficients ad[i,j,IT] et bd[i,j,IT] obtenus respectivement avec les temps d'intégration IT1-ITn.

Selon les capteurs d'image, il peut s'avérer nécessaire d'ajouter au modèle de bruit, une composante de compensation identique pour tous les pixels du capteur d'image, dépendant du temps d'intégration. Cette composante peut être déterminée en comparant les pixels à une position [i,j] dans les images DIM obtenues à une même température TP pour les temps d'intégration IT0-ITn. Cette comparaison peut être effectuée en considérant quelques pixels dans chacune des images DIM obtenues à une même température TP, pour les différents temps d'intégration IT0-ITn, la composante de compensation étant fixée à une valeur moyenne des valeurs obtenues pour les pixels considérés.

Chacune des figures 4 à 6 représente une courbe C2, C4, C6 de variation de la valeur d'un pixel px[i,j] en fonction de la température TP dans les images IM non corrigées, fournies par le capteur d'image IS, et une courbe C1, C3, C5 correspondant au modèle bm[i,j] défini par l'équation (1), et déterminé pour le pixel [i,j] par les coefficients ad[i,j], bd[i,j], ab[i,j] et bb[i,j]. Les courbes C2, C4, C6 ont été tracées à partir de valeurs de pixel px[i,j] obtenues à des températures TP1 ≃ 27°C, TP2 ≃ 32°C, TP3 ≃ 36,5°C et TP4 ≃ 41°C.

Les courbes C1, C2 de la figure 4 correspondent à un temps d'intégration de 50 μs. La figure 4 fait apparaître un écart entre la valeur du pixel px[i,j] en sortie du capteur d'image IS et la valeur correspondante bm[i,j] déterminée par le modèle (équation (1)), inférieur à 0,6%.

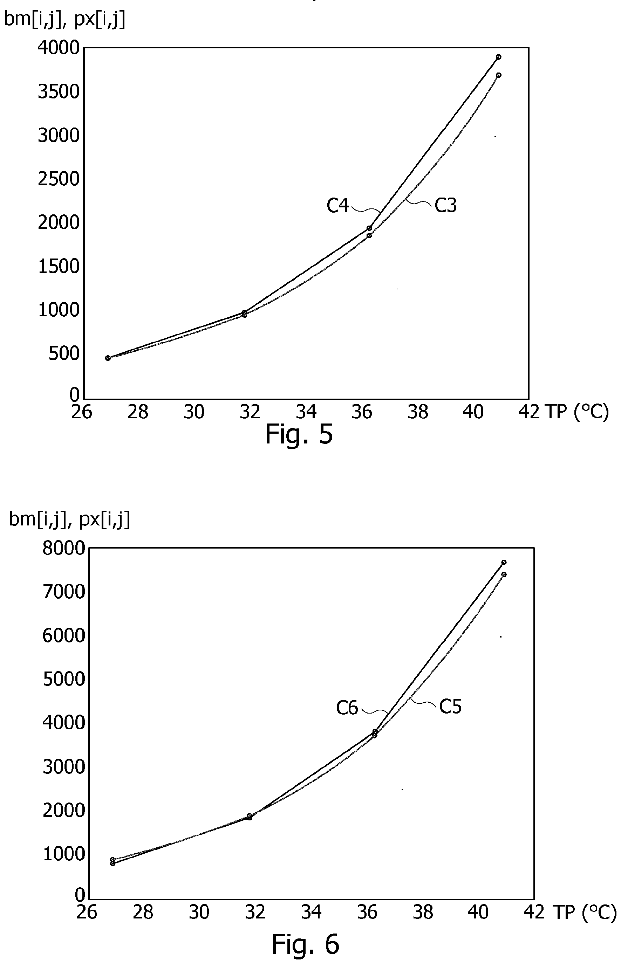

Les courbes C3-C6 des figures 5 et 6 ont été obtenues, respectivement avec des temps d'intégration de 6,654 ms et 13,321 ms. La figure 5 fait apparaître un écart maximum entre la valeur mesurée du pixel px[i,j] et la valeur correspondante bm[i,j] déterminée par le modèle, inférieur à 14%. La figure 6 fait apparaître un écart maximum entre la valeur du pixel px[i,j] en sortie du capteur d'image IS et la valeur correspondante bm[i,j] déterminée par le modèle, inférieur à 8%. Il peut être observé que ces écarts maximum sont obtenus à des températures supérieures à 38°C.

Selon un mode de réalisation, le processeur IPRC reçoit périodiquement ou en permanence la température TP du capteur d'image IS, et à chaque fois que le processeur IPRC calcule l'image de correction BM, il mémorise la température courante mesurée par le capteur d'image IS. Lorsque la valeur courante de la mesure de température TP fournie par le capteur d'image s'écarte de la valeur mémorisée, le processeur IPRC effectue un nouveau calcul de l'image de correction BM en tenant compte de la dernière mesure de température fournie par le capteur d'image. Selon un mode de réalisation, un nouveau calcul de l'image de correction BM est effectué à l'apparition d'un écart de température compris entre à 0,5°C et 2°C, par exemple 1°C. De même, lorsque le temps d'intégration IT est modifié, le processeur IPRC recalcule l'image de correction BM en fonction du nouveau temps d'intégration.

Selon un mode de réalisation, le capteur d'image IS comporte plusieurs valeurs de gain qui peuvent être sélectionnées à partir d'une interface de commande du dispositif imageur ou en fonction des conditions d'éclairement du capteur d'image. Dans ce cas, des images de noir DIM sont générées pour chaque valeur de gain pour déterminer des tables de coefficients AD, BD, AB, BB pour chaque valeur de gain. Les valeurs de temps d'intégration IT utilisées pour générer les images DIM peuvent être choisies en fonction des valeurs de gain pour éviter les cas improbables où le risque de saturation du capteur d'image IS est élevé. Par ailleurs, le processeur IPRC calcule une image courante de correction BM pour chaque valeur de gain, en fonction du temps d'intégration IT et de la température du capteur d'image IS.

La qualité des images produites par un capteur d'image peut également être dégradée en raison d'une variation de gain d'un pixel à l'autre, et en fonction de la température du capteur d'image. La variation de gain d'un pixel à l'autre peut résulter notamment de différences structurelles entre les circuits de pixel.

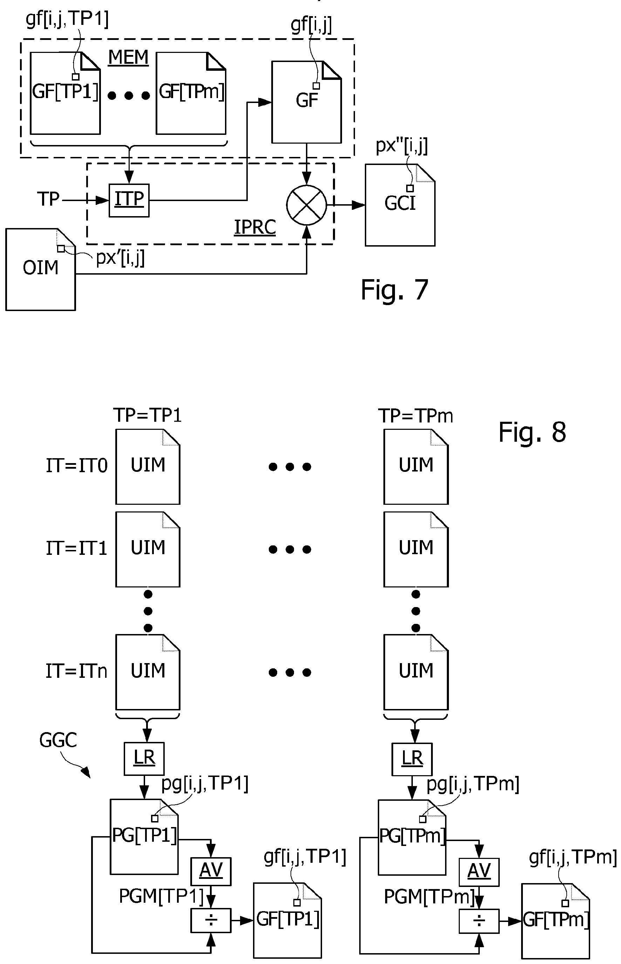

La figure 7 représente un circuit de correction de gain, selon un mode de réalisation. Le circuit de correction de gain reçoit l'image corrigée OIM en sortie du circuit de réduction de bruit et multiplie chaque pixel px'[i,j] de l'image corrigée OIM par un facteur de correction de gain gf[i,j] calculé pour le pixel [i,j] en fonction de la température courante du capteur d'image. Les pixels px"[i,j] de l'image corrigée GCI ainsi obtenue ont ainsi été produits avec un gain uniformisé dans toute l'image GCI.

Le facteur de correction de gain gf[i,j] appartient à une table d'uniformisation de gain GF stockée en mémoire MEM et déterminée par un module d'interpolation ITP en fonction de la température TP du capteur d'image et d'un ensemble de tables GF[TP1], ... GF[TPm] d'uniformisation de gain déterminées pour diverses températures TP1, ...,

TPm. L'interpolation appliquée par le module d'interpolation ITP peut être par exemple une interpolation linéaire ou une interpolation polynomiale.

Selon un mode de réalisation, la table GF d'uniformisation de gain est mise à jour à l'apparition d'un écart de température compris entre à 0,5°C et 2°C, par exemple 1°C, par rapport à la température précédemment prise en compte pour le calcul de la table de correction.

Le traitement d'image illustré par la figure 7 peut être mise en oeuvre par le processeur IPRC pour traiter des flux vidéo, y compris des flux vidéo à plusieurs centaines de trames par seconde. Si nécessaire, ce traitement peut être réalisé par un circuit en logique câblée (comme illustré par la figure 7). En outre, tous les pixels de chaque image peuvent être traités simultanément en parallèle, en prévoyant un tel circuit pour chacun des pixels de l'image.

De même, en raison de la simplicité du traitement faisant intervenir uniquement des opérations d'addition, de multiplication et d'inversion, le calcul de la table GF d'uniformisation de gain peut être effectué en temps réel à la suite d'une variation de température TP. Si nécessaire, la fonction de mise à jour de la table GF d'uniformisation de gain exécutée par le processeur IPRC peut être également réalisée par un circuit en logique câblée (comme illustré par la figure 7), sachant que si nécessaire, l'opération d'interpolation peut être réalisée au moins en partie à l'aide d'une ou plusieurs tables de correspondance ("lookup table"). Tous les pixels gf[i,j] de la table GF d'uniformisation de gain peuvent être également calculés en parallèle.

La figure 8 représente un circuit de génération GGC des tables GF[TP1], ... GF[TPm] d'uniformisation de gain, selon un mode de réalisation. Le circuit de calcul reçoit en entrée des images UIM[IT0...ITn, TP1..TPm] obtenues durant une phase de calibration, à l'aide du dispositif imageur placé devant une source lumineuse ayant une intensité lumineuse apparente uniforme dans toutes les directions. Les images UIM[IT0...ITn, TP1..TPm] ont été obtenues en soumettant le capteur d'image IS à différentes températures TP1, ... TPm, et pour chaque température, en fixant successivement le temps d'intégration IT à différentes valeurs IT0, ... ITn. La source lumineuse utilisée pour générer les images UIM[IT0...ITn, TP1..TPm] peut être une sphère intégrante, le dispositif imageur étant placé à l'intérieur de l'ouverture de la sphère intégrante. Au lieu de faire varier le temps d'intégration IT, il est également possible de faire varier l'intensité lumineuse émise par la source lumineuse uniforme, en fixant le temps d'intégration du capteur d'image, par exemple à une valeur moyenne. Les températures TP1, ... TPm utilisées sont par exemple fixées à 20, 30 ,40 et 50°C.

Le circuit GGC calcule une table de gain PG[TP] pour chacune des températures TP1-TPm, à l'aide d'un circuit de calcul de régression linéaire RL, le gain pg[i,j,TP] de chaque pixel [i,j] correspondant à la pente moyenne de la courbe de valeur du pixel px[i,j] en fonction du temps d'intégration IT. Par un calcul de moyenne AV, le circuit GGC détermine ensuite pour chaque température TP=TP1, ... TPm, une table PGM[TP] de gain moyen comportant une valeur de gain moyen pour chaque pixel [i,j]. Chaque table GF[TP1], ... GF[TPm] d'uniformisation de gain est ensuite générée en divisant pour chaque pixel [i,j], la valeur correspondante pgm[i,j] dans la table PGM[TP] de gain moyen par la valeur correspondante pg[i,j,TP] dans la table PG[TP] de gain.

La qualité des images fournies par le capteur d'image IS peut également être affectée par la présence de circuits de pixels défectueux. Selon un mode de réalisation, le processeur IPRC est configuré pour calculer, pour chaque pixel [i,j], une moyenne d'écarts E[i,j] à différentes températures TP=TP1, ... TPm, entre la valeur du pixel dx[i,j,IT,TP] des images DIM fournies par le capteur d'image IS à un temps d'intégration moyen $IT_{moy}$ et la valeur de correction bm[i,j,IT,TP] pour ce pixel, et pour comparer cette moyenne à une valeur de seuil. Si cette moyenne d'écarts est supérieure à la valeur de seuil pour un pixel [i,j], le pixel [i,j] est considéré comme défectueux. La détection des pixels défectueux peut être effectuée durant la phase de calibration à la suite de l'acquisition des images DIM. Par exemple, la moyenne d'écarts E[i,j] peut être calculée pour chaque pixel [i,j] par l'équation suivante :

$$E[i,j] = \left[ \sum_{TP} \left( dx[i,j,IT_{moy},TP] - bm[i,j,IT_{moy},TP] \right)^2 \right]^{1/2} \qquad (5)$$

avec TP = TP1, TP2, .... TPm.

Selon un mode de réalisation, le processeur IPRC effectue une correction de l'image OIM ou GCI en remplaçant la valeur px'[i,j] ou p''[i,j] de chaque pixel ainsi détecté défectueux par la valeur d'un pixel voisin, ou une valeur moyenne de pixels voisins du pixel défectueux. Les pixels voisins d'un pixel défectueux peuvent également être considérés comme défectueux et former une zone de pixels défectueux. Dans ce cas, chaque pixel de la zone de pixels défectueux peut être remplacé par un pixel voisin de la zone de pixels défectueux ou une valeur moyenne de ces pixels voisins.

Il apparaîtra clairement à l'homme de l'art que la présente invention est susceptible de diverses variantes de réalisation et diverses applications. En particulier, l'invention n'est pas limitée à un capteur d'image effectuant le calcul de l'image de correction BM. En effet, l'image de correction BM peut être déterminée par un calculateur externe disposant des tables AB, BB, AD, BD et recevant du capteur d'image le temps d'intégration IT et la température TP du capteur d'image IS, et le cas échéant, le gain appliqué par le capteur d'image.

Par ailleurs, la correction des images fournies par le capteur d'image peut être également effectuée par un tel calculateur externe recevant les images non corrigées IM du capteur d'image.

En outre, la température TP n'est pas nécessairement fournie par le capteur d'image IS, mais peut être mesurée par un capteur de température externe associé au capteur d'image.

Les images traitées peuvent être des images fixes ou des images vidéo.

Les deux modes de réalisation qui suivent ne relèvent pas de l'invention définie par les revendications et ne sont présents qu'à titre illustratif.

La correction de gain des pixels peut être effectuée à partir d'images corrigées OIM obtenues par d'autres procédés de réduction du bruit, de sorte que cette correction de gain peut être mise en oeuvre sans réaliser la correction de réduction de bruit décrite en référence à la figure 2.

De même, la détection de pixels défectueux telle que décrite précédemment peut être effectuée sans mettre en oeuvre l'un ou l'autre des procédés de correction illustrés par les figures 2 et 7, réalisées pour obtenir les images OIM et GCI. Il en est de même, la correction des pixels défectueux peut être réalisée sur une image non corrigée, c'est-à-dire sans mettre en oeuvre l'un ou l'autre des procédés de correction illustrés par les figures 2 et 7.

## Revendications

1.  Procédé de correction de défauts apparaissant dans une image fournie par un capteur d'image (IS), le procédé comprenant des étapes consistant à :

    recevoir une image à corriger (IM), prise par le capteur d'image,
    recevoir une température (TP) du capteur d'image, acquise lors de la prise de l'image à corriger par le capteur d'image,
    recevoir un temps d'intégration (IT) appliqué par le capteur d'image pour prendre l'image à corriger, et
    pour chaque pixel (px[i,j]) de l'image à corriger, retrancher de la valeur du pixel un facteur de correction de bruit (bm[i,j]) spécifique du pixel, issu d'un modèle de réduction de bruit comprenant une composante linéaire fonction de la température du capteur d'image, ajoutée à une composante exponentielle fonction de la température du capteur d'image et multipliée par le temps d'intégration, les composantes linéaire et exponentielle dépendant de coefficients (ab[i,j], bb[i,j], ad[i,j], bd[i,j]) spécifiques du pixel,
    **caractérisé en ce qu'**il comprend en outre des étapes consistant à :

    acquérir par le capteur d'image (IS) des images (DIM) en l'absence de lumière avec un temps d'intégration minimum (IT0), chaque image étant prise à une température respective distincte, et
    déterminer, pour chaque pixel de l'image à corriger, des coefficients (ab[i,j], bb[i,j]) de la composante linéaire, par des calculs de régression linéaire (LR) appliqués à des pixels correspondant dans les images (DIM) en l'absence de lumière prises aux températures respectives.

2.  Procédé selon la revendication 1, dans lequel le modèle de réduction de bruit est défini par l'équation suivante :

$$bm[i,j] = IT \times ad[i,j] \times Exp(bd[i,j] \times TP) + ab[i,j] \times TP + bb[i,j]$$

    dans laquelle bm[i,j] est le facteur de correction de bruit à retrancher d'un pixel (px[i,j]) correspondant de l'image à corriger (IM), IT est le temps d'intégration, TP est la température du capteur d'image (IS), EXP est la fonction exponentielle, et ad[i,j], bd[i,j], ab[i,j] et bb[i,j] sont les coefficients spécifiques du pixel (px[i,j]).

3.  Procédé selon la revendication 1 ou 2, comprenant un calcul du facteur de correction de bruit (bm[i,j]) de chaque pixel (px[i,j]) à chaque fois que le temps d'intégration (IT) est modifié, ou à chaque fois que la température (TP) du capteur d'image (IS) s'écarte d'une valeur précédente de plus d'une valeur de seuil d'écart de température.

4.  Procédé selon la revendication 1, comprenant des étapes consistant à :

    acquérir par le capteur d'image (IS) des images (DIM) en l'absence de lumière, à différents temps d'intégration (IT1-ITn), le capteur d'image étant soumis à différentes températures (TP1-TPm),
    générer des images corrigées (DIM') obtenues en retranchant de chacune des images (DIM) prises par le capteur d'image (IS) en l'absence de lumière à différents temps d'intégration (IT1-ITn) et à différentes températures (TP1-TPm), l'image (DIM) prise par le capteur d'image (IS) en l'absence de lumière avec le temps d'intégration minimum (IT0) et à la même température, et

déterminer les coefficients (ad[i,j], bd[i,j]) de la composante exponentielle par des calculs de régression exponentielle (EF) appliqués aux pixels respectifs des images corrigées obtenues aux différentes températures (TP1-TPm) et correspondant à un même temps d'intégration.

**5.** Procédé selon la revendication 4, dans lequel les coefficients (ad[i,j], bd[i,j]) de la composante exponentielle sont déterminés par un calcul de moyenne de coefficients obtenus par les calculs de régression exponentielle (EF) pour différents temps d'intégration (IT1-ITn).

**6.** Procédé selon l'une des revendications 1 à 5, dans lequel le modèle de réduction de bruit comprend une composante identique pour tous les pixels du capteur d'image (IS) dépendant du temps d'intégration (IT).

**7.** Procédé selon l'une des revendications 1 à 6, comprenant l'acquisition d'un flux d'images vidéo, le facteur de correction de bruit (bm[i,j]) correspondant à chaque pixel (px[i,j]) d'une image du flux vidéo, étant retranché du pixel correspondant de chaque image du flux vidéo.

**8.** Procédé selon l'une des revendications 1 à comprenant des étapes consistant à :

recevoir une commande de sélection d'une valeur de gain du capteur d'image, et

sélectionner pour chaque pixel (px[i,j]) de l'image à corriger (IM) un facteur de correction de bruit (bm[i,j]) spécifique du pixel en fonction de la valeur de gain sélectionnée, le facteur de correction de bruit étant à utiliser pour corriger la valeur de chaque pixel de l'image à corriger, le facteur de correction de bruit étant déterminé à partir d'un jeu de coefficients (AD, BD, AB, BB) spécifiques des pixels, généré en fonction de la valeur de gain sélectionnée.

**9.** Procédé selon l'une des revendications 1 à 8, comprenant une étape consistant, pour chaque pixel (px[i,j]) d'une image corrigée (OIM) après réduction de bruit, à multiplier la valeur du pixel par un facteur de correction de gain (gf[i,j]) spécifique du pixel, issu d'une table d'uniformisation de gain (GF), pour obtenir une image (GCI) avec un gain uniformisé.

**10.** Procédé selon la revendication 9, comprenant une mise à jour de la table (GF) d'uniformisation de gain à chaque fois que le temps d'intégration (IT) est modifié, ou à chaque fois que la température (TP) du capteur d'image (IS) s'écarte d'une valeur précédente de plus d'une valeur de seuil d'écart de température, la mise à jour de la table (GF) d'uniformisation de gain étant effectuée par des calculs d'interpolation appliqués à un ensemble de tables d'uniformisation de gain (GF[TP1]- GF[TPm]) déterminées pour différentes températures (TP1-TPm).

**11.** Procédé selon la revendication 10, comprenant des étapes consistant à :

acquérir par le capteur d'image (IS) des séries d'images (UIM) en présence d'une source de lumière uniforme avec différents temps d'intégration (ITO-InT) ou sous différentes intensités de la source de lumière, chaque série d'images étant prise à une température (TP1-TPm) respective distincte, et

déterminer un gain, pour chaque pixel d'une des images de chaque série d'images, par un calcul de régression linéaire (LR) appliqués à des pixels correspondants ([i,j]) dans les images de la série d'images,

déterminer, pour chaque pixel d'une des images de chaque série d'images, un facteur de correction de gain (gf[i,j,TP1]- gf[i,j,TPm]) en divisant une moyenne des gains obtenus pour tous les pixels de la série d'images par le gain déterminé pour le pixel.

**12.** Procédé selon l'une des revendications 1 à comprenant des étapes consistant à :

acquérir par le capteur d'image (IS) une série d'images (DIM) en l'absence de lumière, à un temps d'intégration moyen (IT1-ITn), chaque image étant obtenue avec le capteur d'image soumis à une température respective (TP1-TPm),

calculer, pour chaque pixel (dx[i,j]) d'une des images de la série d'images acquises, une moyenne d'écarts aux différentes températures (TP1-TPm) de capteur d'image, chaque écart étant calculé pour une température du capteur d'image, entre la valeur du pixel de l'image de la série d'image correspondant à la température du capteur d'image et le facteur de correction de bruit (bm[i,j]) défini pour le pixel au temps d'intégration moyen et à la température du capteur d'image, et

comparer la moyenne d'écarts à une valeur de seuil, et si la moyenne d'écarts est supérieure à la valeur de seuil pour un pixel, le pixel est considéré comme défectueux.

13. Procédé selon la revendication 12, comprenant une étape consistant à :

corriger chaque image acquise par le capteur d'image (IS) en remplaçant la valeur d'un pixel défectueux par la valeur d'un pixel voisin ou une valeur moyenne de pixels voisins, ou
corriger chaque image acquise par le capteur d'image (IS) en remplaçant les valeurs respectives d'un pixel défectueux et de pixels voisins du pixel défectueux par la valeur d'un pixel voisin du pixel défectueux et des pixels voisins du pixel défectueux ou une valeur moyenne de pixels voisins du pixel défectueux et des pixels voisins du pixel défectueux.

14. Dispositif de correction de défauts apparaissant dans une image (IM) fournie par un capteur d'image (IS), **caractérisé en ce qu'**il met en oeuvre le procédé selon l'une des revendications 1 à 13.

15. Dispositif imageur comprenant un capteur d'image (IS), un circuit d'acquisition d'une température (TP) du capteur d'image et un circuit d'acquisition d'un temps d'intégration (IT) appliqué au capteur d'image,
**caractérisé en ce qu'**il met en oeuvre le procédé selon l'une des revendications 1 à 13.

16. Dispositif selon la revendication 14 ou 15, dans lequel le capteur d'image (IS) est de type CTIA ou SF.

17. Un produit programme d'ordinateur chargeable dans la mémoire d'un calculateur, qui, lorsqu'il est exécuté par le calculateur, configure le calculateur pour mettre en oeuvre le procédé selon l'une des revendications 1 à 13.

**Patentansprüche**

1. Verfahren zum Korrigieren von Fehlern, die in einem durch einen Bildsensor (IS) gelieferten Bild auftreten, das Verfahren umfassend die Schritte, bestehend aus:

Empfangen eines zu korrigierenden Bildes (IM), das durch den Bildsensor aufgenommen wird,
Empfangen einer Temperatur (TP) des Bildsensors, die bei der Aufnahme des zu korrigierenden Bildes durch den Bildsensor erfasst wird,
Empfangen einer Integrationszeit (IT), die durch den Bildsensor angewendet wird, um das zu korrigierende Bild aufzunehmen, und
für jedes Pixel (px[i,j]) des zu korrigierenden Bildes, Subtrahieren eines pixelspezifischen Rauschkorrekturfaktors (bm[i,j]) von dem Pixelwert, der von einem Rauschunterdrückungsmodell stammt, umfassend eine lineare Komponente, die von der Temperatur des Bildsensors abhängig ist, zu einer von der Temperatur des Bildsensors abhängigen Exponentialkomponente addiert und mit der Integrationszeit multipliziert wird, wobei die lineare und die Exponentialkomponente von pixelspezifischen Koeffizienten (ab[i,j], bb[i,j], ad[i,j], bd[i,j]) abhängig sind,
**dadurch gekennzeichnet, dass** es ferner die Schritte umfasst, bestehend aus:

Erfassen, durch den Bildsensor (IS), von Bildern (DIM) in Abwesenheit von Licht mit einer minimalen Integrationszeit (IT0), wobei jedes Bild bei einer jeweiligen unterschiedlichen Temperatur aufgenommen wird, und
Bestimmen, für jedes Pixel des zu korrigierenden Bildes, der Koeffizienten (ab[i,j], bb[i,j]) der linearen Komponente durch Berechnungen einer linearen Regression (LR), die auf entsprechende Pixel in den Bildern (DIM) in Abwesenheit von Licht angewendet werden, die bei den jeweiligen Temperaturen aufgenommen werden.

2. Verfahren nach Anspruch 1, wobei das Rauschunterdrückungsmodell durch die folgende Gleichung definiert wird:

$$bm[i,j] = IT \times ad[i,j] \times Exp(bd[i,j] \times TP) + ab[i,j] \times TP + bb[i,j]$$

wobei bm[i,j] der Rauschkorrekturfaktor ist, der von einem entsprechenden Pixel (px[i,j]) des zu korrigierenden Bildes (IM) zu subtrahieren ist, IT die Integrationszeit ist, TP die Temperatur des Bildsensors (IS) ist, EXP die Exponentialfunktion ist und ad[i,j], bd[i,j], ab[i,j] und bb[i,j] die pixelspezifischen Koeffizienten (px[i,j]) sind.

3. Verfahren nach Anspruch 1 oder 2, umfassend eine Berechnung des Rauschkorrekturfaktors (bm[i,j]) jedes Pixels (px[i,j]) jedes Mal, wenn die Integrationszeit (IT) geändert wird, oder jedes Mal, wenn die Temperatur (TP) des Bildsensors (IS) von einem vorherigen Wert um mehr als einen Temperaturabweichungsschwellenwert abweicht.

4. Verfahren nach Anspruch 1, umfassend die Schritte, bestehend aus:

Erfassen, durch den Bildsensor (IS), von Bildern (DIM) in Abwesenheit von Licht zu verschiedenen Integrationszeiten (IT1-ITn), wobei der Bildsensor verschiedenen Temperaturen (TP1-TPm) ausgesetzt ist,
Erzeugen von korrigierten Bildern (DIM'), die erhalten werden, indem von jedem der Bilder (DIM), die durch den Bildsensor (IS) in Abwesenheit von Licht bei verschiedenen Integrationszeiten (IT1-ITn) und bei verschiedenen Temperaturen (TP1-TPm) aufgenommen werden, das Bild (DIM), das durch den Bildsensor (IS) in Abwesenheit von Licht mit der minimalen Integrationszeit (IT0) und bei der gleichen Temperatur aufgenommen wird, subtrahiert wird, und
Bestimmen der Koeffizienten (ad[i,j], bd[i,j]) der Exponentalkomponente durch Berechnungen einer exponentiellen Regression (EF), die auf die jeweiligen Pixel der korrigierten Bilder angewendet werden, die bei verschiedenen Temperaturen (TP1-TPm) erhalten werden und einer gleichen Integrationszeit entsprechen.

5. Verfahren nach Anspruch 4, wobei die Koeffizienten (ad[i,j], bd[i,j]) der Exponentialkomponente durch eine Mittelwertbildung der Koeffizienten bestimmt werden, die durch die Berechnungen der exponentiellen Regression (EF) für verschiedene Integrationszeiten (IT1-ITn) erhalten werden.

6. Verfahren nach einem der Ansprüche 1 bis 5, wobei das Rauschunterdrückungsmodell eine für alle Pixel des Bildsensors identische Komponente (IS) umfasst, die von der Integrationszeit (IT) abhängig ist.

7. Verfahren nach einem der Ansprüche 1 bis 6, umfassend das Erfassen eines Stroms von Videobildern, wobei der Rauschkorrekturfaktor (bm[i,j]), der jedem Pixel (px[i,j]) eines Bildes des Videostromes entspricht, von dem entsprechenden Pixel jedes Bildes des Videostromes subtrahiert wird.

8. Verfahren nach einem der Ansprüche 1 bis 7, umfassend die Schritte, bestehend aus:

Empfangen eines Befehls zum Auswählen eines Verstärkungswerts des Bildsensors, und
Auswählen eines pixelspezifischen Rauschkorrekturfaktors (bm[i,j]) für jedes Pixel (px[i,j]) des zu korrigierenden Bildes (IM) in Abhängigkeit von dem ausgewählten Verstärkungswert, wobei der Rauschkorrekturfaktor zum Korrigieren des Wertes jedes Pixels des zu korrigierenden Bildes zu verwenden ist, wobei der Rauschkorrekturfaktor aus einem Satz von pixelspezifischen Koeffizienten (AD, BD, AB, BB) bestimmt wird, der in Abhängigkeit von dem ausgewählten Verstärkungswert erzeugt wird.

9. Verfahren nach einem der Ansprüche 1 bis 8, umfassend einen Schritt, bestehend aus, für jedes Pixel (px[i,j]) eines korrigierten Bildes (OIM) nach der Rauschunterdrückung, einem Multiplizieren des Pixelwerts mit einem pixelspezifischen Verstärkungskorrekturfaktor (gf[i,j]) aus einer Verstärkungsvereinheitlichungstabelle (GF), um ein Bild (GCI) mit einer vereinheitlichten Verstärkung zu erhalten.

10. Verfahren nach Anspruch 9, umfassend eine Aktualisierung der Verstärkungsvereinheitlichungstabelle (GF) jedes Mal, wenn die Integrationszeit (IT) geändert wird, oder jedes Mal, wenn die Temperatur (TP) des Bildsensors (IS) von einem vorherigen Wert um mehr als einen Temperaturabweichungsschwellenwert abweicht, wobei die Aktualisierung der Verstärkungsvereinheitlichungstabelle (GF) durch Interpolationsberechnungen erfolgt, die auf eine Menge von Verstärkungsvereinheitlichungstabellen (GF[TP1]- GF[TPm]) angewendet werden, die für verschiedene Temperaturen (TP1-TPm) bestimmt werden.

11. Verfahren nach Anspruch 10, umfassend die Schritte, bestehend aus:

Erfassen, durch den Bildsensor (IS), von Bildserien (UIM) in Anwesenheit einer einheitlichen Lichtquelle mit verschiedenen Integrationszeiten (IT0-ITn) oder unter verschiedenen Intensitäten der Lichtquelle, wobei jede Bildserie bei einer jeweiligen unterschiedlichen Temperatur (TP1-TPm) aufgenommen wird, und
Bestimmen einer Verstärkung, für jedes Pixel eines der Bilder jeder Bildserie, durch eine Berechnung der linearen Regression (LR), die auf entsprechende Pixel ([i,j]) in den Bildern der Bildserie angewendet wird,
Bestimmen eines Verstärkungskorrekturfaktors (gf[i,j,TP1]- gf[i,j,TPm]) für jedes Pixel eines der Bilder jeder Bildserie, indem ein Mittelwert der für alle Pixel der Bildserie erhaltenen Verstärkungen durch die für das Pixel bestimmte Verstärkung dividiert wird.

12. Verfahren nach einem der Ansprüche 1 bis 11, umfassend die Schritte, bestehend aus:

Erfassen, durch den Bildsensor (IS), einer Reihe von Bildern (DIM) in Abwesenheit von Licht bei einer mittleren Integrationszeit (IT1-ITn), wobei jedes Bild mit dem Bildsensor erhalten wird, der einer jeweiligen Temperatur (TP1-TPm) ausgesetzt ist,

Berechnen, für jedes Pixel (dx[i,j]) eines der Bilder der erfassten Bildserie, eines Mittelwerts von Abweichungen bei verschiedenen Bildsensortemperaturen (TP1-TPm), wobei jede Abweichung für eine Temperatur des Bildsensors berechnet wird, zwischen dem Wert des Pixels des Bildes der Bildserie, der der Temperatur des Bildsensors entspricht, und dem Rauschkorrekturfaktor (bm[i,j]), der für das Pixel bei der mittleren Integrationszeit und der Temperatur des Bildsensors definiert ist, und

Vergleichen des Mittelwerts der Abweichungen mit einem Schwellenwert, und wobei, wenn der Mittelwert der Abweichungen für ein Pixel größer als der Schwellenwert ist, das Pixel als defekt betrachtet wird.

13. Verfahren nach Anspruch 12, umfassend einen Schritt, bestehend aus:

Korrigieren jedes durch den Bildsensor (IS) erfassten Bildes durch Ersetzen des Wertes eines defekten Pixels durch den Wert eines benachbarten Pixels oder einen mittleren Wert benachbarter Pixel, oder

Korrigieren jedes durch den Bildsensor (IS) erfassten Bildes durch Ersetzen der jeweiligen Werte eines defekten Pixels und von Nachbarpixeln des defekten Pixels durch den Wert eines Nachbarpixels des defekten Pixels und von Nachbarpixeln des defekten Pixels oder einen Durchschnittswert von Nachbarpixeln des defekten Pixels und von Nachbarpixeln des defekten Pixels.

14. Vorrichtung zum Korrigieren von Fehlern, die in einem Bild (IM) auftreten, das durch einen Bildsensor (IS) geliefert wird,
**dadurch gekennzeichnet, dass** sie das Verfahren nach einem der Ansprüche 1 bis 13 ausführt.

15. Abbildungsvorrichtung mit einem Bildsensor (IS), einer Schaltung zum Erfassen einer Temperatur (TP) des Bildsensors und einer Schaltung zum Erfassen einer auf den Bildsensor angewendeten Integrationszeit (IT),
**dadurch gekennzeichnet, dass** sie das Verfahren nach einem der Ansprüche 1 bis 13 ausführt.

16. Vorrichtung nach Anspruch 14 oder 15, wobei der Bildsensor (IS) von einem Typ CTIA oder SF ist.

17. In den Speicher eines Rechners ladbares Computerprogrammprodukt, das, wenn es durch den Rechner ausgeführt wird, den Rechner so konfiguriert, dass er das Verfahren nach einem der Ansprüche 1 bis 13 ausführt.

**Claims**

1. A method of correcting defects appearing in an image produced by an image sensor (IS), the method comprising the steps of:

receiving an image to be corrected (IM), taken by the image sensor,

receiving a temperature (TP) from the image sensor, acquired when the image to be corrected is taken by the image sensor,

receiving an integration time (IT) applied by the image sensor when taking the image to be corrected, and

for each pixel (px[i,j]) of the image to be corrected, subtracting from the pixel value a pixel-specific noise correction factor (bm[i,j]) derived from a noise reduction model comprising a linear component dependent on the temperature of the image sensor, added to an exponential component depending on the temperature of the image sensor and multiplied by the integration time, the linear and exponential components depending on coefficients (ab[i,j], bb[i,j], ad[i,j], bd[i,j]) specific to the pixel,

wherein it further comprises the steps of

acquiring by the image sensor (IS) images (DIM) in the absence of light with the minimum integration time (IT0), each image being taken at a distinct respective temperature, and

determining, for each pixel of the image to be corrected, the coefficients (ab[i,j], bb[i,j]) of the linear component, by linear regression (LR) calculations applied to corresponding pixels in the images (DIM) in the absence of light taken at the respective temperatures.

2. The method according to claim 1, wherein the noise reduction model is defined by the following equation:

$$bm[i,j] = IT \times ad[i,j] \times Exp(bd[i,j] \times TP) + ab[i,j] \times TP + bb[i,j]$$

where bm[i,j] is the noise correction factor to be subtracted from a corresponding pixel (px[i,j]) of the image to be corrected (IM), IT is the integration time, TP is the temperature of the image sensor (IS), EXP is the exponential function, and ad[i,j], bd[i,j], ab[i,j] and bb[i,j] are the pixel-specific coefficients (px[i,j]).

3. The method according to claim 1 or 2, comprising calculating the noise correction factor (bm[i,j]) of each pixel (px[i,j]) each time the integration time (IT) is changed, or each time the temperature (TP) of the image sensor (IS) deviates from a previous value by more than a temperature deviation threshold value.

4. The method according to claim 1, comprising the steps of:

acquiring by the image sensor (IS) images (DIM) in the absence of light, at different integration times (IT1-ITn), the image sensor being subjected to different temperatures (TP1-TPm), generating corrected images (DIM') obtained by subtracting from each of the images (DIM) taken by the image sensor (IS) in the absence of light at different integration times (IT1-ITn) and at different temperatures (TP1-TPm), the image (DIM) taken by the image sensor (IS) in the absence of light with the minimum integration time (IT0) and at the same temperature, and determining the coefficients (ad[i,j], bd[i,j]) of the exponential component by exponential fitting (EF) calculations applied to the respective pixels of the corrected images obtained at different temperatures (TP1-TPm) and corresponding to the same integration time.

5. The method according to claim 4, wherein the coefficients (ad[i,j], bd[i,j]) of the exponential component are determined by averaging coefficients obtained by exponential fitting (EF) calculations for different integration times (IT1-ITn).

6. The method according to one of claims 1 to 5, wherein the noise reduction model comprises an identical component for all pixels of the image sensor (IS) depending on the integration time (IT).

7. The method according to any of claims 1 to 6, comprising acquiring a stream of video images, the noise correction factor (bm[i,j]) corresponding to each pixel (px[i,j]) of an image of the video stream is subtracted from the corresponding pixel of each image of the video stream.

8. The method according to one of claims 1 to 7, comprising the steps of:

receiving a command to select a gain value of the image sensor, and selecting for each pixel (px[i,j]) of the image to be corrected (IM) a pixel-specific noise correction factor (bm[i,j]) as a function of the selected gain value, the noise correction factor being used to correct the value of each pixel of the image to be corrected, the noise correction factor being determined from a set of pixel-specific coefficients (AD, BD, AB, BB) generated as a function of the selected gain value.

9. The method according to one of claims 1 to 8, comprising, for each pixel (px[i,j]) of a corrected image (OIM) after a noise reduction, multiplying the value of the pixel by a gain correction factor (gf[i,j]) specific to the pixel, taken from a gain normalization table (GF), to obtain an image (GCI) with a normalized gain.

10. The method according to claim 9, comprising updating the gain normalization table (GF) each time the integration time (IT) is changed, or each time the temperature (TP) of the image sensor (IS) deviates from a previous value by more than a temperature deviation threshold value, the updating of the gain normalization table (GF) being carried out by interpolation calculations applied to a set of gain normalization tables (GF[TP1]- GF[TPm]) determined for different temperatures (TP1-TPm).

11. The method according to claim 10, comprising the steps of:

acquiring by the image sensor (IS) a series of images (UIM) in the presence of a uniform light source with different integration times (IT0-ITn) or at different intensities of the light source, each series of images being taken at a different respective temperature (TP1-TPm),

determining a gain, for each pixel of one of the images of each image series, by a linear regression calculation (LR) applied to corresponding pixels ([i,j]) in the images of the image series, and

determining, for each pixel of one of the images of each image series, a gain correction factor (gf[i,j,TP1]-gf[i,j,TPm]) by dividing an average of the gains obtained for all the pixels of the image series by the gain determined for the pixel.

**12.** The method according to one of claims 1 to 11, comprising the steps of:

acquiring by the image sensor (IS) a series of images (DIM) in the absence of light, at an average integration time (IT1-ITn), each image being obtained with the image sensor subjected to a respective temperature (TP1-TPm),

calculating, for each pixel (dx[i,j]) of one of the images of the acquired image series, an average of deviations at different image sensor temperatures (TP1-TPm), each deviation being calculated for one image sensor temperature, between the value of the pixel of the image of the image series corresponding to the image sensor temperature and the noise correction factor (bm[i,j]) defined for the pixel at the average integration time and at the image sensor temperature, and

comparing the average of deviations to a threshold value, and if the average of deviations is greater than the threshold value for a pixel, considering the pixel as defective.

**13.** The method according to claim 12, comprising a step of:

correcting each image acquired by the image sensor (IS) by replacing the value of a defective pixel with a value of a neighboring pixel or an average value of neighboring pixels, or

correcting each image acquired by the image sensor (IS) by replacing the respective values of a defective pixel and pixels neighboring the defective pixel with the value of a pixel neighboring the defective pixel and the pixels neighboring the defective pixel or an average value of pixels neighboring the defective pixel and the pixels neighboring the defective pixel.

**14.** A device for correcting defects appearing in an image (IM) produced by an image sensor (IS), configured to implement the method according to one of claims 1 to 13.

**15.** An imaging device comprising an image sensor (IS), a circuit for acquiring a temperature (TP) of the image sensor and a circuit for acquiring an integration time (IT) applied to the image sensor, configured to implement the method according to one of claims 1 to 13.

**16.** A device according to claim 14 or 15, wherein the image sensor (IS) is of a CTIA or SF type.

**17.** A computer program product loadable into the memory of a computer, which, when executed by the computer, configures the computer to perform the method according to any of claims 1 to 13.

# Fig. 1
## Art Antérieur

# Fig. 2

Fig. 3

Fig. 4

bm[i,j], px[i,j]

Fig. 5

bm[i,j], px[i,j]

Fig. 6

Fig. 7

Fig. 8

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20040051796 A
- US 20150110248 A